# EUROPÄISCHE PATENTANMELDUNG

(11) **EP 2 144 086 A1**
(43) Veröffentlichungstag der Anmeldung: **13.01.2010**
(21) Anmeldenummer: 08012464.7
(22) Anmeldetag: 10.07.2008
(51) Int. Cl.: G01S 13/93, G01S 15/93

(54) **Verfahren und Vorrichtung zur Steuerung eines Parkassistenzsystems für Fahrzeuge**

(71) Anmelder: Valeo Schalter und Sensoren GmbH, 74321 Bietigheim-Bissingen (DE)
(72) Erfinder: Hoffsommer, Klaus, 74321 Bietigheim-Bissingen (DE)

(57) **Zusammenfassung**

Es wird ein Verfahren und eine Vorrichtung zur Steuerung eines Parkassistenzsystems für Fahrzeuge (1) vorgeschlagen, die während des Parkvorgangs vorwärts und rückwärts bewegt werden und bei dem eine Mehrzahl von Sensoren (4) in einer vorderen und einer hinteren Detektoranordnung (2,3) in einer Auswertelektronik (5) ausgewertet werden, die die Abstände zu Hindernissen erfassen. Bei einer Rückwärtsbewegung des Fahrzeugs (1) werden eine vorgegebene Anzahl von Sensoren (4) der vorderen Detektionsanordnung (2) und/oder deren dazugehörigen Auswertefunktionen in einer Auswertelektronik (5) abgeschaltet, wobei vorzugsweise in der vorderen Detektoranordnung (2) die beiden relativ außen am Fahrzeug (1) angebrachten Sensoren (4) in Betrieb bleiben und jeweils mindestens einer der mittleren Sensoren (4) und/oder deren dazugehörigen Auswertefunktionen abgeschaltet werden.

## Beschreibung

### Stand der Technik

Die Erfindung betrifft ein Verfahren und eine Vorrichtung zur Steuerung eines Parkassistenzsystems für Fahrzeuge, die während des Parkvorgangs vorwärts und rückwärts bewegt werden, nach der Gattung des Hauptanspruchs und des nebengeordneten Anspruchs.

Es ist beispielsweise aus der DE 10 2004 029 038 A1 ein Parkassistenzsystem zur Unterstützung des Einparkens von Fahrzeugen bekannt, bei dem Informationsdaten über Hindernisse oder Abstellflächenbegrenzungen mit Ultraschallsensoren an dem zu parkenden Fahrzeug gewonnen werden. Die Hindernisinformationen werden erzeugt, während das zu abzustellende Fahrzeug in der Nähe des Abstellbereichs, bzw. am Abstellbereich vorbeibewegt wird.

Zur Gewinnung der notwendigen Informationen werden beim Stand der Technik insbesondere Abstandsdaten zu Hindernissen, z.B. mit den Ultraschallsensoren, im Umgebungsbereich des Fahrzeugs ermittelt. Zur Ausführung des Parkassistenzsystems werden dann noch Geschwindigkeitsdaten, z.B. aus dem Antriebssystem oder aus entsprechenden Sensoren am Fahrzeug, Lenkwinkel- und Getriebestellungen ebenfalls aus einer entsprechend in den meisten Fahrzeugen üblicherweise auch für andere Steuerungsvorgänge eingesetzten Sensorik ausgewertet.

Entsprechende Steuersignale für das Hilfssystem zum Parken werden dann nach der erfolgten Auswertung der Sensordaten an eine Lenkunterstützungs- und/oder Geschwindigkeitsautomatik im Fahrzeug weitergeleitet. Für sich gesehen ist aus dem eingangs erwähnten Stand der Technik auch noch bekannt, wie geeignete Ultraschallsensoren am Fahrzeug angebracht werden können und wie die Einzelsensoren mit einem im wesentlichen kreisförmigen Abstandsquerschnitt die Umgebung abtasten können.

Es ist bei solchen Parkassistenzsystemen üblich, dass die Ultraschallsensoren bei einem Fahrzeug beispielsweise im vorderen und im hinteren Stoßfängerbereich angebracht werden. Zur Optimierung des Systems und insbesondere der Auswerteelektronik für die Sensordaten werden hierbei oft in der Auswerteelektronik Mikrokontroller mit relativ geringer Rechenleistung eingesetzt, bei denen dann mit einer entsprechenden Steuerung auch viele Rechenoperationen vermieden werden können ohne das Systemverhalten negativ zu beeinflussen.

In herkömmlichen Parkassistenzsystemen werden oft kostengünstige 8- oder 16-Bit Mikrokontroller eingesetzt, die die Daten von vier bis acht in Einzelfällen auch bis zu zwölf Ultraschallsensoren verarbeiten. Üblicherweise sind hier bei einer Rückwärtsfahrt die vorderen und die hinteren Sensoren gleichzeitig bzw. auch sequenziell in einem bestimmten Zeitfenster aktiv.

Die Rechnerbelastung steigt bei einer solchen Rückwärtsfahrt mit der Anzahl der Sensoren an und es kann hierbei dann zu einer eventuell nachteiligen Spitzenbelastung kommen, wenn noch zusätzliche Auswerte- und Rechenfunktionen benötigt werden, wie z.B. eine Odometriebestimmung, d.h. zur Orts- oder Lagebestimmung des Fahrzeugs hinsichtlich des abzustellenden Fahrzeugs und der Umgebung der Abstellfläche, eine Lenkungsregelung, ein sogenanntes Objekttracking oder eine sonstige Positionsberechnung.

Ein Erhöhung der Rechenleistung durch einen den Wechsel auf einen leistungsfähigeren Mikrokontroller ist oft aus Kostengründen oder wegen zusätzlicher Entwicklungs-, Freigabe, oder sonstiger Handlingskosten bezüglich der Hard- und/oder der Software nicht durchführbar.

### Darstellung der Erfindung

Die Erfindung geht von einem Verfahren zur Steuerung eines Parkassistenzsystems für Fahrzeuge aus, bei dem während des Parkvorgangs das Fahrzeug vorwärts und rückwärts bewegt wird und bei dem eine Vielzahl von Sensordaten aus einer vorderen und einer hinteren Detektoranordnung in einer Auswertelektronik ausgewertet werden, die die Abstände zu den Hindernissen im Bereich der Abstellfläche für das Fahrzeug betreffen. Erfindungsgemäß werden in vorteilhafter Weise bei einer Rückwärtsbewegung des Fahrzeugs eine vorgegebene Anzahl von Sensoren der vorderen Detektionsanordnung und/oder deren dazugehörigen Auswertefunktionen in einer Auswertelektronik abgeschaltet.

Bevorzugt sollen dabei bei einer Anordnung von einer vorgegebenen Anzahl von Sensoren, vorzugsweise Ultraschallsensoren, in der vorderen Detektoranordnung die beiden relativ außen am Fahrzeug angebrachten Sensoren in Betrieb bleiben und jeweils mindestens einer der mittleren Sensoren und/oder deren dazugehörigen Auswertefunktionen abgeschaltet werden. Somit kann gemäß der Erfindung auf einfache Weise die Rechenbelastung der Auswerteelektronik in dem Fahrzustand reduziert werden, in dem die Auslastung des Mikrokontrollers in der Auswerteelektronik in der Regel am höchsten ist, was im allgemeinen in der Fahrsituation der langsamen Rückwärtsfahrt der Fall ist.

Bei dieser langsamen Rückwärtsfahrt beim Einparkvorgang werden dann in vorteilhafter Weise die vorderen mittleren Sensoren und/oder die dazugehörigen Auswertefunktionen abgeschaltet, wodurch das Systemverhalten des Parkassistenzsystems nicht negativ beeinflusst wird, da die Objekte, die während der Rückwärtsfahrt gemeldet werden sollen, zuerst im Erfassungsbereich der hinteren und der vorderen äußeren Sensoren auftauchen.

Bei einer Anordnung von jeweils drei Sensoren in der vorderen Detektoranordnung kann zum Beispeil der mittlere Sensor und/oder dessen dazugehörige Auswertefunktionen abgeschaltet werden und bei einer Anordnung von jeweils vier Sensoren in der vorderen Detektoranordnung können ebenfalls einer der mittleren Sensoren oder beide und/oder deren dazugehörigen Auswertefunktionen abgeschaltet werden. Bei einer Anordnung von jeweils sechs Sensoren in der vorderen Detektoranordnung können in vorteilhafter Weise einer oder bis zu vier der mittleren Sensoren und/oder deren dazugehörigen Auswertefunktionen abgeschaltet werden.

Hierbei kann eine entsprechende Auswahl auch bei anderen, eventuell auch ungeraden Anordnungen von Sensoren eine entsprechende Abschaltung vorgesehen werden, zum Beispiel bei einem fünfkanaligen Sensorsystem können die mittleren oder inneren eins bis drei Sensoren und bei einem siebenkanaligen Sensorsystem können die mittleren oder inneren eins bis fünf Sensoren abgeschaltet werden.

Ein erfindungsgemäße Vorrichtung zur Durchführung eines Verfahrens nach einem der vorhergehenden Ausführungsformen kann in vorteilhafter Weise dadurch gebildet werden, dass in der Auswerteelektronik ein Baustein vorhanden ist, der die Anzahl der in der vorderen Detektoranordnung angebrachten Sensoren und die Getriebestellung des Fahrzeugs hinsichtlich der Erkennung eines eingelegten Rückwärtsganges auswertet. Hieraus ist dann ein Abschaltsignal für eine vorgegebene oder einstellbare Anzahl von Sensoren erzeugbar, die im mittleren Bereich der vorderen Detektoranordnung liegen.

### Kurze Beschreibung der Zeichnung

Ausführungsbeispiele der Erfindung werden anhand der Figuren der Zeichnung erläutert. Es zeigen:
Figur 1 zeigt eine schematische Ansicht eines Fahrzeugs mit Abstandssensoren nach dem Stand der Technik,
Figur 2 ein Ablaufdiagramm zur Erläuterung der Ausführung des erfindungsgemäßen Verfahrens zur Steuerung eines Parkassistenzsystems für Fahrzeuge mit abschaltbaren Sensoren,
Figur 3 eine Ansicht eines Fahrzeugs mit einem abschaltbaren Sensor von drei Sensoren in einer vorderen Detektoranordnung des Fahrzeugs,
Figur 4 eine Ansicht eines Fahrzeugs mit maximal zwei abschaltbaren Sensoren von vier Sensoren in einer vorderen Detektoranordnung des Fahrzeugs und
Figur 5 eine Ansicht eines Fahrzeugs mit maximal vier abschaltbaren Sensoren von sechs Sensoren in einer vorderen Detektoranordnung des Fahrzeugs.

### Wege zur Ausführung der Erfindung

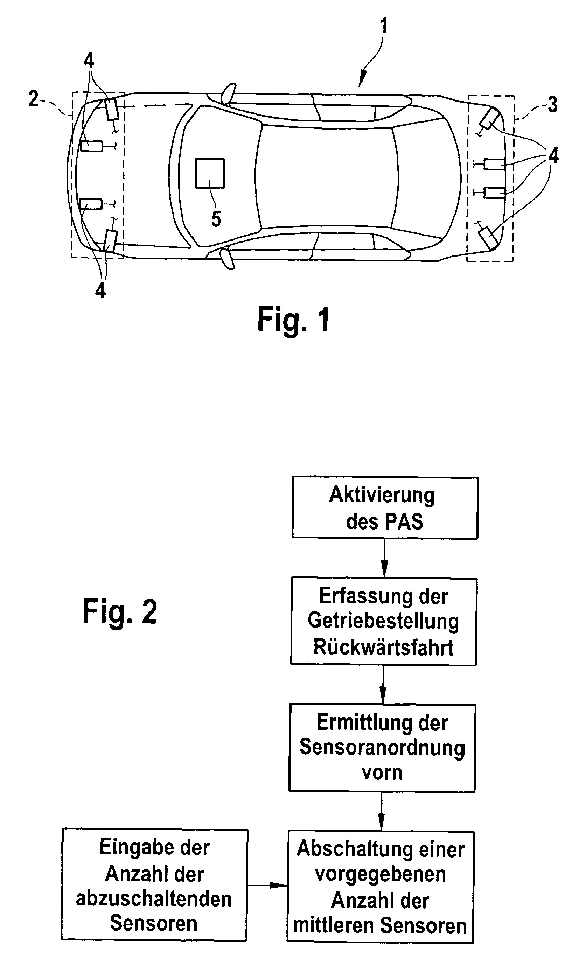

Aus Figur 1 ist ein Fahrzeug 1 zu entnehmen, das in der Nähe von hier nicht näher gezeigten Hindernissen abgestellt werden soll. Aus dem eingangs erwähnten Stand der Technik DE 10 2004 029 038 A1 ist hierzu bekannt, dass jeweils eine Detektoranordnung 2 an der Vorderseite und eine Detektoranordnung 3 an der Hinterseite des Fahrzeugs 1 mit Sensoren 4, beispielsweise Ultraschallsender und -empfänger, angebracht ist. Mit den Detektoranordnungen 2 und 3 sollen Abstandswerte zu den Hindernissen bei einem Park- oder Abstellvorgang erfasst werden.

Die Sensoren 4 der Detektoranordnungen 2 und 3 sind über entsprechende Kommunikationskanäle (z.B. CAN-Bus) mit einer in der Regel computergesteuerten Auswerteeinheit 5 im Fahrzeug 1 verbunden, die aus den Abstandsdaten der Sensoren 4 und den fahrzeugspezifischen Daten, wie zum Beispiel Geschwindigkeit und Lenkwinkel, ein Parkassistenzsystems für das Fahrzeug 1 bereitstellt, mit dem der zuvor erwähnte Park- oder Abstellvorgang durchführbar oder unterstützbar ist.

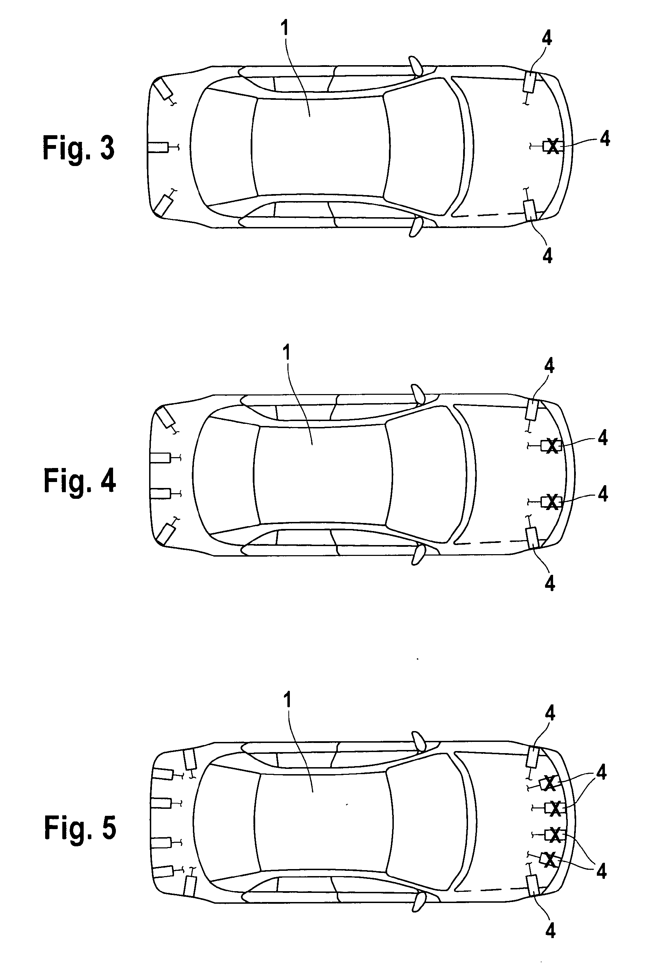

Anhand eines in Figur 2 dargestellten Ablaufdiagramms soll ein Park- oder Abstellvorgang mit einer Abschaltung von einer vorgegebenen Anzahl von Sensoren 4 nach Figur 3 bis 5 erläutert werden.

Das Prinzip der hier vorgestellten Lösung besteht darin, dass der Fahrer gemäß dem Ablaufdiagramm nach der Figur 2 zunächst das Parkassistenzsystems aktiviert. Nach der Aktivierung sollte die Getriebestellung hinsichtlich einer Erkennung des Rückwärtsganges, insbesondere des langsamen Rückwärtsfahrens beim Einparken, erfasst und ausgewertet werden. Anhand von bekannten Daten über die Anzahl und die Anordnung der Sensoren 4, insbesondere Ultraschallsensoren, in der vorderen Detektoranordnung 2 (vgl. Figur 1) kann dann eine Abschaltung von mittleren Sensoren 4 in der nachfolgenden Art und Weise, automatisch gesteuert durch die Auswerteelektronik 5 oder manuell eingegeben, durchgeführt werden.

Aus Figur 3 ist eine Anordnung mit drei Sensoren 4 vorn am Fahrzeug 1 ersichtlich, bei der empfindungsgemäß der mittlere Sensor 4 (mit einem Kreuz gekennzeichnet) abgeschaltet wird. Figur 4 zeigt eine Anordnung mit vier Sensoren 4 vorn am Fahrzeug 1, bei der erfindungsgemäß einer oder beide mittlere Sensoren 4 (mit einem Kreuz gekennzeichnet) abgeschaltet werden. In Figur 5 ist eine Anordnung mit sechs Sensoren 4 vorn am Fahrzeug 1 gezeigt, bei der erfindungsgemäß einer oder bis zu vier der mittleren Sensor 4 (mit einem Kreuz gekennzeichnet) abgeschaltet werden.

Es kann hierbei, wie in der Beschreibungseinleitung erwähnt, eine entsprechende Auswahl auch bei anderen Anordnungen mit Sensoren 4, eventuell auch ungeraden Anordnungen, fünf-, siebenkanalig etc., hinsichtlich der Abschaltung vorgesehen werden.

## Patentansprüche

1. Verfahren zur Steuerung eines Parkassistenzsystems für Fahrzeuge (1), die während des Parkvorgangs vorwärts und rückwärts bewegt werden und bei dem eine Mehrzahl von Sensoren (4) in einer vorderen und einer hinteren Detektoranordnung (2,3) in einer Auswertelektronik (5) ausgewertet werden, die die Abstände zu Hindernissen erfassen, **dadurch gekennzeichnet, dass** bei einer Rückwärtsbewegung des Fahrzeugs (1) eine vorgegebene Anzahl von Sensoren (4) der vorderen Detektionsanordnung (2) und/oder deren dazugehörigen Auswertefunktionen in einer Auswertelektronik (5) abgeschaltet werden.

2. Verfahren nach Anspruch 1, **dadurch gekennzeichnet, dass** bei einer Anordnung von einer vorgegebenen Anzahl von Sensoren (4) in der vorderen Detektoranordnung (2) die beiden relativ außen am Fahrzeug (1) angebrachten Sensoren (4) in Betrieb bleiben und jeweils mindestens einer der mittleren Sensoren (4) und/oder deren dazugehörigen Auswertefunktionen abgeschaltet werden.

3. Verfahren nach Anspruch 2, **dadurch gekennzeichnet, dass** bei einer Anordnung von jeweils drei Sensoren (4) in der vorderen Detektoranordnung (2) der mittlere Sensor (4) und/oder dessen dazugehörige Auswertefunktionen abgeschaltet wird.

4. Verfahren nach Anspruch 2, **dadurch gekennzeichnet, dass** bei einer Anordnung von jeweils vier Sensoren (4) in der vorderen Detektoranordnung (2) einer der mittleren Sensoren (4) oder beide und/oder deren dazugehörigen Auswertefunktionen abgeschaltet werden.

5. Verfahren nach Anspruch 2, **dadurch gekennzeichnet, dass** bei einer Anordnung von jeweils sechs Sensoren (4) in der vorderen Detektoranordnung (2) einer oder bis zu vier der mittleren Sensoren (4) und/oder deren dazugehörigen Auswertefunktionen abgeschaltet werden.

6. Vorrichtung zur Durchführung eines Verfahrens nach einem der vorhergehenden Ansprüche, **dadurch gekennzeichnet, dass** in der Auswerteelektronik (5) ein Baustein vorhanden ist, der die Anzahl der in der vorderen Detektoranordnung (2) angebrachten Sensoren (4) und die Getriebestellung des Fahrzeugs (1) hinsichtlich der Erkennung eines eingelegten Rückwärtsganges auswertet und mit dem ein Abschaltsignal für eine vorgegebene oder einstellbare Anzahl von Sensoren (4) erzeugbar ist, die im mittleren Bereich der vorderen Detektoranordnung (2) liegen.

7. Vorrichtung nach Anspruch 6, **dadurch gekennzeichnet, dass** die Sensoren (4) Ultraschallsensoren sind.
